# EUROPÄISCHE PATENTSCHRIFT

(11) **EP 2 879 832 B1**
(45) Veröffentlichungstag und Bekanntmachung des Hinweises auf die Patenterteilung: **19.12.2018**
(21) Anmeldenummer: 13763013.3
(22) Anmeldetag: 09.09.2013
(51) Int. Cl.: B23K 15/00, B23P 15/14

(54) **GROSSGETRIEBEZAHNRAD UND VERFAHREN ZUR HERSTELLUNG EINES GROSSGETRIEBEZAHNRADS**
LARGE GEAR AND METHOD OF PRODUCING A LARGE GEAR
GRAND ENGRENAGE ET PROCÉDÉ DE FABRICATION D'UN GRAND ENGRENAGE

(30) Priorität: 17.09.2012 DE 102012018244
(43) Veröffentlichungstag der Anmeldung: 10.06.2015
(73) Patentinhaber: Flender GmbH, 46395 Bocholt (DE)
(72) Erfinder: KLEIN-HITPASS, Arno, 52074 Aachen (DE); MEIS, Jean-Andre, 48249 Duelmen (DE); REIMERS, Jan-Dirk, 52074 Aachen (DE)
(74) Vertreter: Maier, Daniel Oliver
(86) Internationale Anmeldenummer: PCT/EP2013/068540
(87) Internationale Veröffentlichungsnummer: WO 2014/040927

(56) Entgegenhaltungen:
- EP-A2- 1 719 572
- CN-B- 101 898 297
- DE-C- 911 500
- US-A- 2 730 795
- US-A- 4 118 848
- US-A1- 2008 245 777
- EHRHARDT ET AL: "Elektronenstrahlschweissen ermoeglicht neue Fertigungstechnologien", FERTIGUNGSTECHNIK UND BETRIEB,, Bd. 28, 1. Januar 1978 (1978-01-01), Seiten 299-302, XP009176167,

## Beschreibung

Die Erfindung betrifft ein Großgetriebezahnrad, das aus mehreren miteinander verschweißten Einzelkomponenten hergestellt ist, und ein Verfahren zur Herstellung eines solchen Großgetriebezahnrads.

Es ist bekannt, Großgetriebezahnräder, also Zahnräder mit Durchmessern von mehr als 600 mm, als einteilige Zahnräder herzustellen.

Ein Nachteil der einteiligen Ausbildung von Großzahnrädern besteht darin, dass diese hinsichtlich des Materialbedarfs und des Fertigungsgewichts extrem ungünstig sind. Als Lösung des Gewichtsproblems ist es bekannt, Großzahnräder eingesickt auszugestalten. Dazu wird im Rahmen einer Drehbearbeitung von den Radseitenflächen Material entfernt. Hierdurch werden jedoch die Fertigungskosten erhöht, da für das Einsicken weitere Zerspanungsleistungen nötig sind und das entfernte Material im Rohteilankauf Kosten verursacht hat.

Ein weiteres Problem tritt beim Einsatzhärten auf. Bei diesem Prozess wird viel Energie in das Bauteil eingebracht, was beim Abschreckprozess zu einem massiven Bauteilverzug führen kann. Dieser Bauteilverzug muss sowohl vorab durch aufwändige konstruktive Maßnahmen als auch nachträglich durch entsprechenden Materialabtrag kompensiert werden. Da der nachträgliche Materialabtrag im gehärteten Zustand des Bauteils erfolgen muss, ist er mit erheblichen Kosten verbunden und entsprechend unwirtschaftlich. Als konstruktive Gegenmaßnahme ist es zum einen bekannt, das Bauteil mit entsprechenden Aufmaßen auszulegen, so dass ein nachträglicher Materialabtrag auf die Soll-Abmessungen erfolgen kann. Zum anderen werden zur besseren Härtbarkeit bzw. zur Verbesserung des Abschreckprozesses Bohrlöcher in das Bauteil eingebracht, die gewährleisten sollen, dass das Bauteil gleichmäßiger von dem Abschreckmedium umspült wird, um einen besseren Temperaturverlauf des Bauteils während seiner Abkühlung und damit einen verminderten Verzug zu erzielen.

Trotz dieser teuren und aufwändigen Gegenmaßnahmen kann der Bauteilverzug in der Praxis jedoch nur schwer in enge Bereiche und kontrolliert eingeschränkt werden. Im Ergebnis sind einteilig ausgebildete Großzahnräder, die in der zuvor beschriebenen Weise hergestellt werden, ein wirtschaftlicher Kompromiss aus Materialkosten und Fertigungskosten und in Summe nur bedingt wirtschaftlich.

Als Alternative zu einteiligen Zahnrädern sind hybride Zahnräder bekannt, die aus mehreren Komponenten zusammengesetzt sind, und zwar zumindest aus einer Nabe, einem an der Nabe angeordneten Radkörper und einem am Außenumfang des Radkörpers angeordneten Zahnkranz. Im Stand der Technik sind bereits verschiedenste Ausführungsformen solcher hybrider Großgetriebezahnräder bekannt, die sich in erster Linie durch die Art unterscheiden, wie die Einzelkomponenten aneinander befestigt sind, sowie durch die Ausbildung der Einzelkomponenten. Einen Überblick über den Stand der Technik der hybriden GrOßzahnfertigung geben z.B. die Lehrbücher Roloff Matek, Maschinenelemente und Niemann Winter Höhn, Maschinenelemente bzw. Patentdokumente wie DE 911 500 B, DE 917 589 B und DE 82 05 946 U1.

Die Befestigung der Einzelkomponenten aneinander kann mechanisch erfolgen. So kann der Zahnkranz beispielsweise mit dem Radkörper verschraubt sein. Alternativ ist auch ein Aufschrumpfen des Zahnkranzes auf den Radkörper bekannt, wobei der Zahnkranz gegenüber dem Radkörper häufig durch entsprechende Formschlusssicherungen gegen eine Relativbewegung gesichert ist.

Alternativ können die Einzelkomponenten auch stoffschlüssig mittels Schweißens miteinander verbunden werden, wofür heutzutage ausschließlich Schweißverfahren mit abschmelzender Elektrode zum Einsatz kommen. Geschweißte Zahnräder müssen neben der Verzahnungssicherheit zusätzlich bezüglich ihrer Schnittstelleneigenschaften ausgelegt werden. Die Fügeschnittstellen setzen sich aus den Bauteilkombinationen Zahnkranz und Radkörper (so genannte Bandage), Radkörper und Nabe sowie Nabe und Welle zusammen. Diese Fügestellen müssen in die Auslegungsberechnungen und Fertigungsplanung mit einbezogen werden. Ferner sind ihr fertigungstechnischer Aufwand und ihre Rückwirkung auf die Bauteilfunktion zu berücksichtigen.

Der Radkörper kann einteilig ausgebildet sein, beispielsweise als Gussteil. Ebenso ist es auch möglich, den Radkörper als Schweißkonstruktion zu fertigen. Geschweißte Radkörper werden insbesondere im Großgetriebebau bei Stückzahlen von 1 bis 5 eingesetzt, da sie oftmals die einzige Möglichkeit zur wirtschaftlichen Fertigung darstellen.

Ein bekannter Fertigungsablauf für hybride Großgetriebezahnräder besteht beispielsweise in der Bereitstellung der Rohteile, dem Vordrehen, dem Schweißen, dem Verzahnen, ggf. einem Induktionshärten, dem Verzahnungsschleifen und der sich anschließenden Qualitätssicherung.

Die bei hybriden Großgetriebezahnrädern anfallenden Schweißarbeiten werden ausnahmslos mittels MSG-Schweißens (MSG = Metallschutzgasschweißen), Elektrodenschweißens oder Unterpulverschweißens ausgeführt. Dies alles sind Verfahren mit abschmelzender Elektrode und relativ hoher Streckenenergie, und daher starker Auswirkung auf die metallurgischen Eigenschaften der Verbindung und des Grundwerkstoffs. Der Schweißprozess als solcher induziert große Eigenspannungen in die Stahlbaustruktur. Daher ist es für den Fachmann heute üblich, im Anschluss an die Schweißbearbeitung zum Spannungsabbau ein Spannungsarmglühen durchzuführen, um zu verhindern, dass weitere Fertigungsschritte diese Spannungen eventuell in Verformung freisetzen, wie beispielsweise beim Eindrehen von Sicken, bei einer asymmetrischen Wanddickenreduzierung oder dergleichen. Diese fertigungsbegleitenden Verformungen sind bekannt und führen zu Verwerfungen der geschweißten Struktur. Entsprechend ist eine hochpräzise Maßbearbeitung eines geschweißten Großgetriebezahnrads nur nach der Durchführung eines Spannungsarmglühens möglich.

Das Härten des geschweißten Bauteils erfolgt mittels Induktionshärtens. Dieses Verfahren hat den Vorteil, dass lediglich lokal eine verhältnismäßig geringe Wärmeenergie in das Bauteil eingebracht wird, wodurch ein starker Bauteilverzug verhindert wird.

Ein Einsatzhärten des geschweißten Bauteils, wie es bei den einteilig ausgebildeten Großgetriebezahnrädern zum Einsatz kommt, wird bei hybriden Großgetriebezahnrädern aufgrund der hohen, durch den Schweißprozess mit abschmelzender Elektrode eingebrachten Eigenspannungen nicht angewendet. Bei Großgetriebezahnrädern führt bereits ein relativ geringer Bauteilverzug, bedingt durch die relativ großen Abmessungen, insbesondere den großen Durchmesser, des Zahnrads, zu erheblich größeren Formabweichungen als bei Kleinzahnrädern. Der Verzug aufgrund des Schweiß-Eigenspannungsabbaus und der Härteverzug wären kumulativ so groß, dass eine aufwändige mechanische Nachbearbeitung im gehärteten Zustand des Bauteils erforderlich wäre. Dies ist jedoch unerwünscht, da es erhebliche Kosten verursacht. Entsprechend ist der Zahnkranz bei bekannten Großgetriebezahnrädern stets aus Vergütungsstahl gefertigt.

Ein Nachteil heute erhältlicher hybrider Großgetriebezahnräder gegenüber einteilig ausgebildeten Großgetriebezahnrädern besteht darin, dass sie nur für geringwertige Flächenbelastungen einsetzbar sind, da die vergüteten Zahnkränze eine geringere Tragfähigkeit als einsatzgehärtete Zahnkränze aufweisen. Während die Flankenfestigkeit bei hybriden Großgetriebezahnrädern im Bereich von etwa 600 - 800 N/mm² liegt, verfügen einteilig ausgebildete und einsatzgehärtete Großgetriebezahnräder über eine Flankenfestigkeit von etwa 1500 N/mm², bei Carbonitrierung bis zu 1700 N/mm². Ein weiterer Nachteil besteht darin, dass die oben genannten Schweißverfahren einen stark manuellen Charakter ausweisen, weshalb sie nur in der Kleinserienfertigung wirtschaftlich einsetzbar sind. Eine Prozessdatenerfassung während der Serienfertigung ist heute dabei nicht Stand der Technik und nur mittels nachträglicher Qualitätskontrollen dokumentierbar.

Bei Kleinzahnrädern führen durch einen Bauteilverzug entstehende Abweichungen abmaßbedingt zu geringeren Formabweichungen als bei Großgetriebezahnrädern, weshalb die vorab für hybride Großgetriebezahnräder geschilderte Problematik des durch das Schweißen und Härten in das Bauteil eingebrachten Verzugs hier nur eine untergeordnete Rolle spielt, insbesondere wenn dabei nur geringwertigere Verzahnungsgüten aufgrund eines Einsatzes im Rahmen der Zeitfestigkeit gefordert ist. Dies ist bei mobilen Getriebeanwendungen der Fall, wie beispielsweise bei Kraft- und Nutzfahrzeugen.

DE 911500 C (Licentia GmbH) 17.05.1954, welches den nächstliegenden Stand der Technik darstellt, offenbart ein Großzahnrad für elektrische Bahngetriebe bei dem der Zahnkranz aus einem geschmiedeten, endlos hergestellten Ring besteht, während der Radkörper und die Nabe aus einem weniger hochwertigen Baustoff, z.B. Stahlblech oder SM-Stahl, hergestellt sind, und wobei die Verbindung des Zahnkranzes mit dem Radkörper durch Verschweißung erfolgt, dadurch gekennzeichnet, dass ein im Einsatz zu härtender Zahnkranzbaustoff von nicht mehr als 0,2 % Kohlenstoffgehalt verwendet wird und dass die Einsatzhärtung nach dem Schweißen erfolgt, ohne dass die Güte der Schweißung beeinträchtigt wird.

Ehrhardt: "Elektronenstrahlschweißen ermöglicht neue Fertigungstechnologien", Fertigungstechnik und Betrieb, Band 28, Jahr 1978, Heft 5, Seiten 299-302, offenbart, dass sich das Elektronenstrahlschweißen einen festen Platz in der Schweißtechnik erobert hat. Eine Besonderheit des Elektronenstrahlschweißens ist, dass ein geringer Verzug erzielt werden kann.

Ausgehend von diesem Stand der Technik ist es eine Aufgabe der vorliegenden Erfindung, ein wirtschaftliches Verfahren zur Herstellung eines Großgetriebezahnrads sowie ein Großgetriebezahnrad zu schaffen, das ein geringes Eigengewicht aufweist und für höchste Belastungen ausgelegt ist.

Zur Lösung dieser Aufgabe schafft die vorliegende Erfindung ein Verfahren zur Herstellung eines aus mehreren Einzelkomponenten bestehenden Großgetriebezahnrads, das die aufeinander folgenden Schritte aufweist:
a) Bereitstellen der Einzelkomponenten, die zumindest eine Nabe, ein Scheibenrad und einen aus Einsatzstahl hergestellten Zahnkranz umfassen,
b) zumindest teilweises mechanisches Weichbearbeiten der Einzelkomponenten,
c) Verbinden der Einzelkomponenten unter Verwendung eines Strahlschweißverfahrens,
d) Einsatzhärten der miteinander verbundenen Einzelkomponenten und
e) Hartbearbeiten zumindest des Zahnkranzes, bei dem das Scheibenrad asymmetrisch ausgebildet wird.

Die vorliegende Erfindung basiert auf der überraschend gewonnenen Erkenntnis, dass mit der Kombination eines Strahlschweißverfahrens und eines Einsatzhärtens nur ein geringer Bauteilverzug einhergeht, der mit geringem Aufwand im Rahmen des abschließenden Hartbearbeitungsschrittes kompensiert werden kann, ohne dass hierfür ein großes Aufmaß belassen werden muss. Die Anmelderin geht davon aus, dass die Eigenspannungen, die durch das Strahlschweißverfahren in das Bauteil eingebracht werden, derart gering sind, dass sie während des Einsatzhärtens vollständig abgebaut werden. Entsprechend verbleibt lediglich der mit dem Einsatzhärten einhergehende Bauteilverzug, der mit dem entsprechenden Verzug bei der Herstellung einteilig ausgebildeter Großgetriebezahnräder vergleichbar und entsprechend beherrschbar ist. Dieser Verzug kann weiterhin erfindungsgemäß mittels der deutlich flexibleren Gestaltung der Radkörperkonstruktion derart modifiziert werden, dass es zu geringeren Verzügen kommt.

Die vorliegende Erfindung schafft somit ein Verfahren, bei dem ein hybrides, einsatzgehärtetes Großgetriebezahnrad hergestellt wird, das die Vorteile der bekannten hybriden Großgetriebezahnräder und die Vorteile der bekannten einteilig ausgebildeten Großgetriebezahnräder miteinander vereint. Dank der hybriden Ausbildung wird bei geringem Materialeinsatz ein Großgetriebezahnrad mit geringem Eigengewicht erzielt. Aufgrund des Einsatzhärtens werden Flankenfestigkeiten von mindestens 1250 N/mm², vorzugsweise 1500 bis 1700 N/mm², realisiert.

Darüber hinaus ist das Strahlschweißverfahren und somit das erfindungsgemäße Verfahren selbst serientauglich und in der Lage, eine Prozessdokumentation des Fügeprozesses zu erfassen. Das Strahlschweißen ist ein im Vergleich serientaugliches Verfahren, da es automatisierbar, insbesondere aber einfach mit einer Prozessdatenüberwachung auszustatten ist. Dies sind branchenspezifische Anforderungen des Qualitätsmanagements, die sich mit diesem Prozess einfach abbilden lassen.

Die vorliegende Erfindung nutzt dabei die Tatsache, dass mittlerweile ausreichend große Vakuumkammern erhältlich sind, dazu, das Strahlschweißverfahren für die vorteilhafte Fertigung von Großgetriebezahnrädern einzusetzen. Weiterhin ergibt sich durch die neue Verwendung von Strahlschweißverfahren die Möglichkeit, Aspekte der Fertigungstechnik und der Nahtvorbereitung derart aufeinander abzustimmen, dass es für die Montage und den Drehprozess Vorteile liefert. Außerdem wirkt die Steifigkeitsmodifikation des geschweißten Kranzes positiv und kann gleichzeitig mit einer serientauglichen, da kostengünstigen Fertigungstechnik kombiniert werden.

Durch das Einsatzhärten, welches die Bearbeitungsschritte Aufkohlen, Härten und Anlassen umfasst, wird eine maximale Flanken- und Fußfestigkeit erzielt. Nach dem derzeitigen Stand der Technik ist nur mit einem solchen Einsatzhärten die höchste spezifische Leistungsdichte und Sicherheit zu erreichen, wie sie bei hochbelasteten, unter Umständen langsam laufenden Großgetrieben gefordert sein kann.

Bevorzugt wird in Schritt c) als Strahlschweißverfahren das Elektronenstrahlschweißverfahren eingesetzt. Das Elektronenstrahlschweißen, das gut für die Serienfertigung geeignet ist, gilt als im Vergleich sehr verzugsarm. Hierdurch sind besonders gute Ergebnisse erzielbar.

Gemäß einer weiteren Ausgestaltung der Erfindung kann ebenfalls überraschend das Laserstrahlschweißen unter Vakuum bzw. Teilvakuum angewendet werden. Hier liegt der zusätzliche Vorteil in einer kostengünstigeren Vakuumkammer, da geringwertigere Vakuumdrücke erreicht werden müssen als beim Elektronenstrahlschweißen.

Gemäß einer Ausgestaltung des erfindungsgemäßen Verfahrens erfolgen im Rahmen der in Schritt e) durchgeführten Hartbearbeitung ein Hartdrehen und Verzahnungsschleifen. Auf diese Weise kann eine Verzahnung höchster Qualität hergestellt werden.

Vorteilhaft wird das Scheibenrad mit zumindest einer außermittig angeordneten Aussparung versehen wird, insbesondere mit mehreren außermittig angeordneten Aussparungen. Derartige Aussparungen sorgen für eine gute Durchdringung der Aufkohlgase und des Abschreckmediums sowie Dampfaustritt und Durchspülfähigkeit und Reinigungsfähigkeit.

Gemäß einer Ausgestaltung des erfindungsgemäßen Verfahrens wird durch eine asymmetrische Gestaltung des Scheibenrads der Verzug des Großgetriebezahnrads eingestellt. Es wird also durch eine asymmetrische Radkörpergestaltung der Zahnradverzug beeinflusst, d.h. die Gestaltung der Radkonstruktion ermöglicht es, die Verzüge zu beeinflussen. Die Radkörperkonstruktion kann so gestaltet werden, dass es zu geringeren Verzügen kommt. Dies kann z.B. durch eine von der Kreisform abweichende Kontur der Aussparungen erreicht werden. Es ist auch möglich, dass die Scheibenräder jeweils mit außermittig angeordneten Aussparungen versehen sind, wobei die Aussparungen jeweils unterschiedliche Formen aufweisen und asymmetrisch verteilt an den Scheibenrädern angeordnet sind. Der während des Einsatzhärtens nicht zu vermeidende Bauteilverzug kann durch geeignete Wahl der Form und Lage der Aussparungen minimiert werden. Diese Aussparungen sorgen für eine ordnungsgemäße Durchdringung mit Aufkohlgasen während des Aufkohlens. Darüber hinaus wird das Abschreckmittel während des Abschreckprozesses gleichmäßig derart verteilt, dass die Temperaturverteilung in den einzelnen Bereichen des Großgetriebezahnrads während des Abkühlens bzw. Abschreckens möglich gleichmäßig ist, wodurch einem Bauteilverzug aufgrund lokaler Temperaturunterschiede effektiv entgegengewirkt wird. Die Tatsache, dass der Temperaturverlauf, beeinflusst durch die asymmetrischen Rippen in Bezug zum Zahnkranz beim Abschrecken als verzugsmindernd wirken, führt zu wirtschaftlich herstellbaren Zahnrädern, da das nachfolgende Schleifen, das einen erheblichen Anteil der Kosten ausmacht, wesentlich reduziert wird.

Gemäß der Erfindung wird das Scheibenrad asymmetrisch ausgebildet, um insbesondere die Steifigkeit des Großgetriebezahnrads an anwendungsspezifische Belastungen anzupassen und zur Beeinflussung des Tragverhaltens. Auf diese Weise kann ein gleichmäßiges Tragverhalten über einen breiten Lastbereich erzielt werden. So kann beispielsweise die Zahnkranzdicke auf einer Seite gegenüber der anderen zwecks Aussteifung erhöht werden.

Gemäß einer Ausgestaltung des erfindungsgemäßen Verfahrens weisen die Einzelkomponenten zwei Scheibenräder auf, die axial im Abstand voneinander angeordnet werden.

Die Scheibenräder können zwecks Aussteifung mittels Rohrsteifen miteinander verbunden werden.

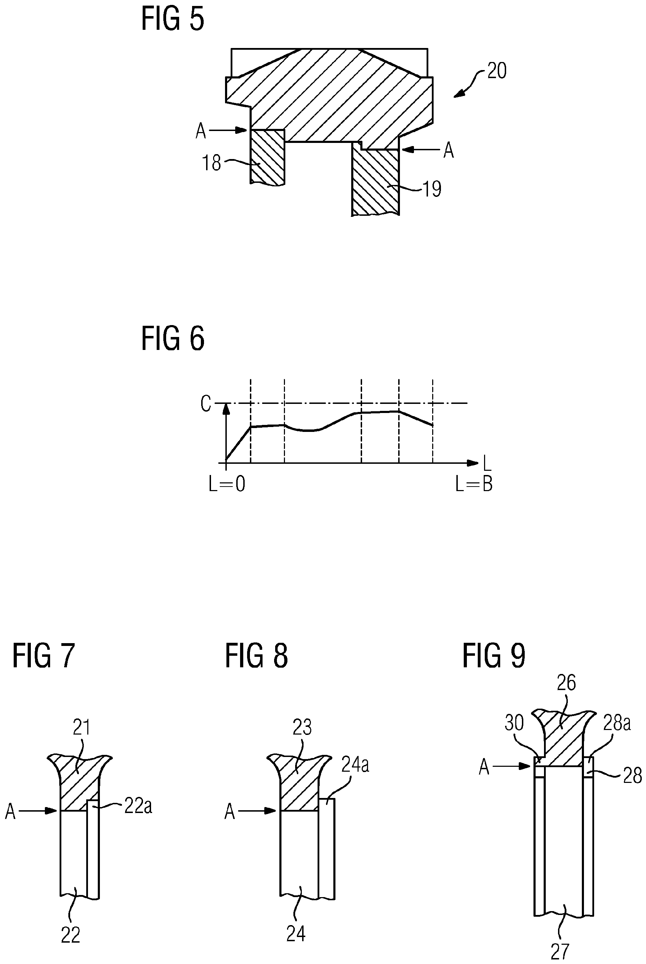

Vorteilhaft werden beide Scheibenräder bezogen auf den Zahnkranz von einer Seite montiert und dieser Zahnkranz zuvor im Schritt b) ebenfalls von der gleichen Seite in einer Aufspannung innen bearbeitet, damit die beiden Scheiben in ihrem Sitz im Zahnkranz zueinander fluchten. Ein Umspannen mit Beidseitenbearbeitung würde dies erschweren. Entsprechend kann auf ein Umspannen des Werkstücks während der Fertigung vorteilhaft verzichtet werden, wodurch der Verfahrensablauf einfacher und preisgünstiger gestaltet wird. Das Schweißen erfolgt dann beidseitig in Einschweißrichtung, siehe hierzu auch Figur 5. Somit ergibt sich durch die neue Verwendung des Strahlschweißverfahrens die Möglichkeit, Aspekte der Fertigungstechnik und der Nahtvorbereitung derart aufeinander abzustimmen, dass es für die Montage und den Drehprozess Vorteile liefert.

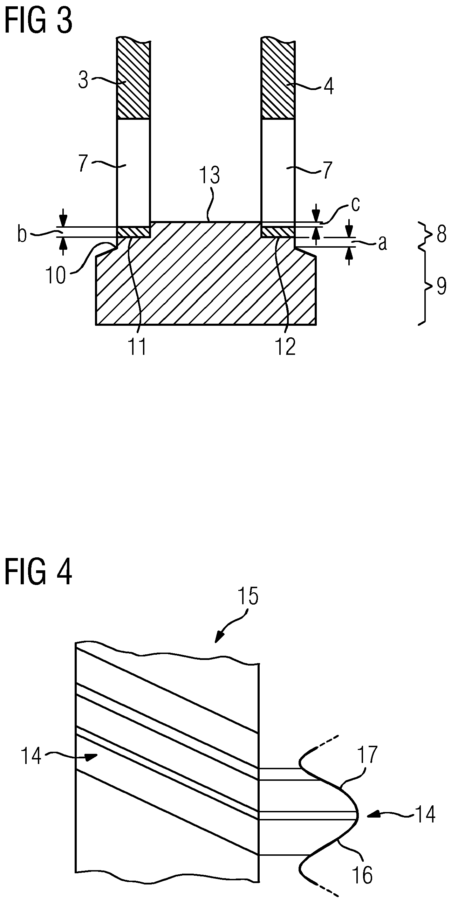

Gemäß einer Ausgestaltung des erfindungsgemäßen Verfahrens wird durch asymmetrische Ausbildung der Dicke des Zahnkranzes die Steifigkeit des Großgetriebezahnrads eingestellt, wodurch ein gleichmäßiges Trageverhalten über einen breiten Lastbereich erzielbar ist. Die asymmetrische Ausbildung der Kränze erlaubt eine Modifikation des Zahntragverhaltens aufgrund der hybriden Bauweise. Zudem ermöglicht es das Strahlschweißen erstmals, durch die nicht nötige V-Fugenvorbereitung die konstruktiven Freiheiten der schmalen Nahtführung zu nutzen. Durch lokale Verringerung der Zahnkranzdicke in den Randbereichen können insbesondere Eckträger vermieden werden. Weitere Einzelheiten zur Zahnkranzdickenmodifikation sind unter Bezugnahme auf die Figuren 4 bis 6 beschrieben.

Bevorzugt wird gemäß einer Ausgestaltung des erfindungsgemäßen Verfahrens, in Schweißrichtung betrachtet, das hintere Ende zumindest einer Schweißfügestelle durch einen radial vorstehenden Vorsprung gebildet, der Teil einer der miteinander zu verschweißenden Komponenten ist. Ein solcher Vorsprung am Ende einer Schweißfügestelle dient als Schweißbadabstützung und vereinfacht die Durchführung des Schweißverfahrens.

Zur Lösung der eingangs genannten Aufgabe schafft die vorliegende Erfindung ferner ein Großgetriebezahnrad, das aus mehreren miteinander verschweißten Einzelkomponenten hergestellt ist, die zumindest eine Nabe, ein Scheibenrad und einen einsatzgehärteten Zahnkranz umfassen, wobei das Zahnrad insbesondere nach einem Verfahren nach einem der vorhergehenden Ansprüche hergestellt ist. An dieser Stelle sei nochmals darauf hingewiesen, dass unter dem Begriff Großgetriebezahnrad im Sinne der vorliegenden Erfindung ein Zahnrad mit einem Außendurchmesser von mehr als 600 mm verstanden wird. Als wesentliche Vorteile des erfindungsgemäßen Großgetriebezahnrads sind insbesondere das geringe Eigengewicht bei geringem Materialeinsatz und die hohe Flankenfestigkeit von 1250 N/mm² und mehr, vorzugsweise mehr als 1500 N/mmm² zu nennen, Dank der das Zahnrad für Großgetriebe geeignet ist, die höchsten Belastungen standhalten müssen, wie beispielsweise Windkraftgetriebe oder dergleichen.

Das Scheibenrad ist bevorzugt mit zumindest einer außermittig angeordneten Aussparung versehen, insbesondere mit mehreren außermittig angeordneten Aussparungen, die insbesondere eine von einer Kreisform abweichende Kontur aufweist/aufweisen. Derartige Aussparungen unterstützen und erleichtern, wie es zuvor bereits erläutert wurde, den Härtungs- und Reinigungsprozess.

Vorteilhaft umfasst der Zahnkranz einen Verbindungsabschnitt mit einer Verbindungsfläche, entlang welcher der Zahnkranz mit dem Scheibenrad verschweißt ist, und einen Zahnkranzabschnitt, an dem die Verzahnung ausgebildet ist, wobei zwischen dem Verbindungsabschnitt und dem Zahnkranzabschnitt zumindest ein Übergangsradius vorgesehen ist, der im Abstand zu der den Zahnkranz und das Scheibenrad miteinander verbindenden Schweißnaht angeordnet ist. Der Abstand zwischen den Übergangsradien und der Schweißnaht dient zur Entkopplung der durch die Schweißnaht erzeugten Kerbwirkung.

Gemäß einer Ausgestaltung des erfindungsgemäßen Zahnrads sind zwei Scheibenräder vorgesehen, die im Abstand voneinander angeordnet sind.

Die beiden Scheibenräder sind bevorzugt zur Versteifung über Rohrsteifen miteinander verbunden.

Weitere Merkmale und Vorteile der vorliegenden Erfindung werden anhand der nachfolgenden Beschreibung von Ausführungsbeispielen der vorliegenden Erfindung unter Bezugnahme auf die beiliegende Zeichnung deutlich. Darin ist
- Figur 1: eine schematische Seitenansicht eines Großgetriebezahnrads gemäß einer Ausführungsform der vorliegenden Erfindung;
- Figur 2: eine Querschnittansicht entlang des in Figur 1 gezeigten Großgetriebezahnrads entlang der Linie II-II in Figur 1;
- Figur 3: eine vergrößerte Ansicht des Ausschnitts III in Figur 2;
- Figur 4: eine Prinzipskizze, die das Zahnprofil einer Schrägverzahnung eines Zahnkranzes zeigt;
- Figur 5: eine schematische Teilquerschnittansicht eines Zahnkranzes eines Großgetriebezahnrads gemäß einer zweiten Ausführungsform der vorliegenden Erfindung;
- Figur 6: ein Diagramm, das den Steifigkeitsverlauf des in Figur 5 dargestellten Zahnkranzes über die Zahnkranzbreite zeigt;
- Figur 7: eine schematische vergrößerte Querschnittansicht eines Übergangs zwischen Scheibenrad und Zahnkranz eines Großgetriebezahnrads gemäß einer dritten Ausführungsform der vorliegenden Erfindung, die eine mögliche Schweißbadabstützung zeigt;
- Figur 8: eine schematische vergrößerte Querschnittansicht eines Übergangs zwischen Scheibenrad und Zahnkranz eines Großgetriebezahnrads gemäß einer vierten Ausführungsform der vorliegenden Erfindung, die eine mögliche Schweißbadabstützung zeigt;
- Figur 9: eine schematische vergrößerte Querschnittansicht eines Übergangs zwischen Scheibenrad und Zahnkranz eines Großgetriebezahnrads gemäß einer fünften Ausführungsform der vorliegenden Erfindung, die eine mögliche Schweißbadabstützung zeigt;
- Figur 10: eine schematische Ansicht eines Großgetriebezahnrads gemäß einer sechsten Ausführungsform der vorliegenden Erfindung, bei der Zahnkranz und Scheibenrad radial miteinander verschweißt sind; und
- Figur 11: eine schematische Seitenansicht eines Großgetriebezahnrads gemäß einer siebten Ausführungsform der vorliegenden Erfindung.

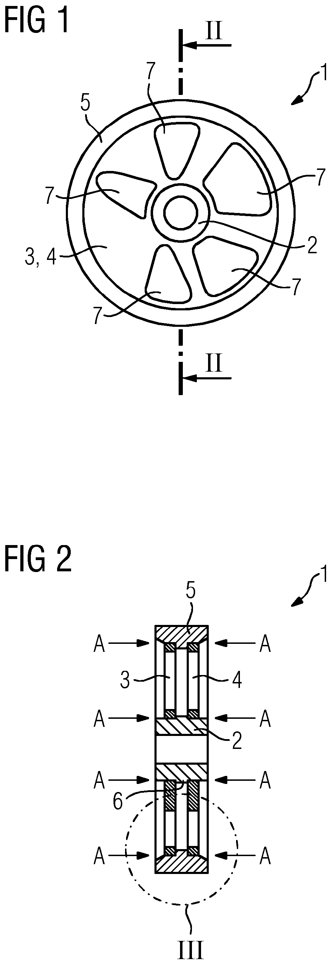

Die Figuren 1 bis 3 zeigen ein Großgetriebezahnrad 1 gemäß einer Ausführungsform der vorliegenden Erfindung. Bei dem Großgetriebezahnrad 1 handelt es sich um ein hybrides Zahnrad, das aus mehreren Einzelkomponenten hergestellt ist, und zwar aus einer Nabe 2, zwei Scheibenrädern 3 und 4 und einem Zahnkranz 5, die an den mit den Pfeilen A gekennzeichneten Positionen miteinander verschweißt sind.

Die Nabe 2 ist im Wesentlichen zylindrisch ausgebildet und umfasst einen radial vorstehenden Absatz 6, der sich im Wesentlichen mittig entlang des Umfangs der Nabe 2 erstreckt und als Anschlag zur Positionierung der Scheibenräder 3 und 4 dient.

Die Scheibenräder 3 und 4 sind jeweils mit außermittig angeordneten Aussparungen 7 versehen. Die Aussparungen 7 weisen jeweils unterschiedliche Formen auf und sind asymmetrisch verteilt an den Scheibenrädern 3 und 4 angeordnet, wie es in Figur 1 dargestellt ist.

Der Zahnkranz 5 ist aus einem Einsatzstahl hergestellt und einsatzgehärtet. Er umfasst einen Verbindungsabschnitt 8 und einen einteilig mit diesem ausgebildeten Zahnkranzabschnitt 9, die über einen Übergangsradius 10 miteinander verbunden sind. Der Verbindungsabschnitt ist mit zwei ringförmigen Verbindungsflächen 11 und 12 versehen, entlang welcher der Zahnkranz 5 mit den Scheibenrädern 3 und 4 verschweißt ist. Zwischen den Verbindungsflächen 11 und 12 erstreckt sich ein radial einwärts vorstehender Absatz 13, der als Anschlag für die Scheibenräder 3 und 4 dient. Das in Figur 3 eingezeichnete Maß a bezeichnet den radialen Abstand zwischen dem Übergangsradius 10 und den Verbindungsflächen 11 und 12 bzw. den dort vorgesehenen Schweißnähten. Der Abstand a ist derart groß zu wählen, dass die Kerbwirkung, die durch die als geschlossene Rundnähte vorgesehenen Schweißnähte erzeugt wird, sicher entkoppelt wird. Das in Figur 3 eingezeichnete Maß b bezeichnet die Mindestkranzstärke der Scheibenräder 3 und 4 zur Ausführung einer thermischen vertretbaren Schweiß- naht entlang der an den Scheibenrädern 3 und 4 vorgesehenen Aussparungen 7, um eine weitgehend ungestörte und symmetrische Wärmeableitung zu gewährleisten

Bei dem Maß c in Figur 3 handelt es sich um die Differenz zwischen der radialen Höhe des Kranzabsatzes 13 des Zahnkranzes 5 und der Mindestkranzstärke b der Scheibenräder 3 und 4, die dazu erforderlich ist, eine durchström- und ablauffähige Struktur für die beim Einsatzhärten verwendeten Medien zu bilden, wie es nachfolgend noch näher beschrieben ist.

Die Maße a, b und c werden im Rahmen der Konstruktion basierend auf einer entsprechenden Berechnung gewählt.

Das in den Figuren 1 bis 3 dargestellte Großgetriebezahnrad 1 wird gemäß einer Ausführungsform eines erfindungsgemäßen Verfahrens wie folgt hergestellt. In einem ersten Schritt werden die Einzelkomponenten bereitgestellt, also die Nabe 2, die beiden Scheibenräder 3 und 4 und der Zahnkranz 5. In einem weiteren Schritt erfolgt eine mechanische Weichbearbeitung der Einzelkomponenten. Hierbei wird die Nabe 2 einer Drehbearbeitung unterzogen. Danach wird der Zahnkranz 5 mit seiner Verzahnung versehen, was beispielsweise im Rahmen einer Wälzfräsbearbeitung erfolgen kann. Im Anschluss werden die Scheibenräder 3 und 4 zwischen Nabe 2 und Zahnkranz 5 eingelegt bzw. eingepresst. Hier sollten leichte Presspassungen der Scheibenräder 3 und 4 verwendet werden. Die Radien in den Absätzen der Einpassflächen für die Scheiben im Bereich radialer und axialer Anschlagsfläche sind gemäß der inneren Fase der einzulegenden Scheibe zu berücksichtigen. Die Scheiben haben weiterhin in vorteilhafter Weise innen einen größeren Radius als auf der außen liegenden Seite, bei der eingeschweißt werden wird. Die Schweißnahtvorbereitung sollte dennoch unter Berücksichtigung der Kosten erfolgen und unnötige Absätze vermeiden. In einem weiteren Schritt werden die Einzelkomponenten dann an den mit den Pfeilen A gekennzeichneten Positionen unter Verwendung eines Strahlschweißverfahrens miteinander verbunden, wobei es sich bei dem Strahlschweißverfahren bevorzugt um ein Elektronenstrahlschweißverfahren handelt. Alternativ kann auch ein Laserstrahlschweißverfahren unter Vakuum oder Teilvakuum verwendet werden.

Im Anschluss wird das Großgetriebezahnrad 1 im verschweißten Zustand einsatzgehärtet, wodurch der Zahnkranz 5 eine Flankenfestigkeit von 1250 N/mm², vorzugsweise 1500 N/mm², oder mehr erhält. Daraufhin schließt sich eine Hartbearbeitung an, im Rahmen derer zumindest der Zahnkranz 5 geschliffen wird. Ferner kann aber auch eine Hartbearbeitung der Nase 2 und/oder der Scheibenräder 3 und 4 folgen, beispielsweise im Rahmen einer Hartdrehbearbeitung.

Ein wesentlicher Vorteil des beschriebenen Verfahrens besteht darin, dass beim Strahlschweißen der Einzelkomponenten nur wenig Wärme in das Bauteil eingebracht wird, was dazu führt, dass die durch das Schweißverfahren induzierten Eigenspannungen im Vergleich zu den herkömmlich verwendeten Schweißverfahren mit abschmelzender Elektrode vergleichsweise gering sind. Entsprechend können diese durch die während des Einsatzhärtens erfolgende Wärmebehandlung abgebaut werden (Spannungsarmglühen). Durch entsprechende Wahl des Maßes a, also des Abstandes der Übergangsradien 10 zu den Schweißnähten bzw. Verbindungsflächen 11 und 12 wird darüber hinaus die Kerbwirkung entkoppelt. Dank des Einsatzhärtens wird dem Zahnkranz 5 eine sehr hohe Flankenfestigkeit verliehen, so dass das Großgetriebezahnrad 1 den höchsten Belastungen standhalten kann. Der während des Einsatzhärtens nicht zu vermeidende Bauteilverzug wird durch entsprechende Wahl der Form und Lage der Aussparungen 7 minimiert. Diese Aussparungen 7 sorgen für eine ordnungsgemäße Durchdringung mit Aufkohlgasen während des Aufkohlens. Darüber hinaus wird das Abschreckmittel während des Abschreckprozesses gleichmäßig derart verteilt, dass die Temperaturverteilung in den einzelnen Bereichen des Großgetriebezahnrads 1 während des Abkühlens bzw. Abschreckens möglich gleichmäßig ist, wodurch einem Bauteilverzug aufgrund lokaler Temperaturunterschiede effektiv entgegengewirkt wird. Darüber hinaus wird durch die Aussparungen 7 auch die Reinigungsfähigkeit des Großgetriebezahnrads 1 verbessert. Es sollte klar sein, dass die Aussparungen 7 auch anders ausgebildet und angeordnet sein können. Beispielsweise kann auch eine symmetrische Anordnung kreisrunder Aussparungen 7 gewählt werden, wenn sich hierdurch ein verzugarmes Bauteil ergibt.

Ein weiterer Vorteil des erfindungsgemäßen Verfahrens besteht darin, dass die Hartbearbeitung aufgrund des geringen Bauteilverzugs während der vorangegangenen Verfahrensschritte mit verhältnismäßig wenig Aufwand durchgeführt werden kann, weshalb die Kosten für die Hartbearbeitung vergleichsweise gering ausfallen.

Es sollte klar sein, dass sich an die zuvor beschriebenen Verfahrensschritte weitere Schritte zur Qualitätssicherung anschließen können. Ferner sei darauf hingewiesen, dass das Großgetriebezahnrad 1 auch nur ein einzelnes Scheibenrad aufweisen kann.

Figur 4 zeigt schematisch das Zahnprofil 14 einer Schrägverzahnung eines Zahnkranzes 15 in Draufsicht und in Seitenansicht. Das treibende Zahnrad 15 rückt während des Betriebs mit der spitzeren Zahnkante 16 in das getriebene Rad (nicht gezeigt) ein. Diese Zahnkante 16 ist prinzipbedingt weniger steif als die stumpf gewinkelte gegenüberliegende Zahnkante 17. Das Tragbild der Schrägverzahnung wandert mit steigender Last von der Zahnkante 16 zur Zahnkante 17 und wird gemäß einer speziellen topografischen Korrektur im Tragbild optimiert.

Das Tragverhalten von Zahnrädern wird insbesondere bei hochfesten, einsatzgehärteten Zahnradwerkstoffen, die eine hohe Lastausnutzung ermöglichen, durch eine merkliche Verformung der elastischen Getriebebauteile und Komponenten überlagert. Auch die Biegung an den Zahnköpfen beträgt in der Regel ein Vielfaches der fertigungsbedingten Formabweichungen am Zahn.

Die Belastung bewirkt außerdem Durchbiegungen und Verdrillungen von Ritzel- und Radwelle, Ritzel- und Scheibenradkörper sowie Lagerabsenkungen und Gehäuseverformungen. Hieraus ergeben sich Schiefstellungen der Zahnflanken, die häufig beträchtlich höher liegen als die fertigungsbedingten Flankenlinienabweichungen. Es kommt somit zu einem ungleichmäßigen Tragen der Verzahnungsfläche in Höhe und Breite, was sowohl die Tragfähigkeit als auch das Geräuschverhalten ungünstig beeinflusst.

Um das hohe Tragvermögen von hochfesten Zahnrädern wiederherzustellen und vermehrte Geräuschbildung zu senken, werden gezielte Abweichungen von der Evolvente (Höhenmodifikation) und von der theoretischen Flankenlinie (Breitenmodifikation) gefertigt, um so unter Last wieder nahezu ideale Geometrien mit gleichmäßiger Lastverteilung zu erhalten.

Bei der Ermittlung der Höhen- und Breitenmodifikationen muss der Gesamteinflussbereich der Substruktur berücksichtigt werden. Die Verformungskette muss über das Zahnrad, die Welle, die Lagerung, das Gehäuse und die Gehäuseanbindung zur Hauptwelle berücksichtigt werden. Durch Höhenmodifikation am Zahnkopf oder auch am Zahnfuß sowie durch Flankenmodifikation oder Breitenmodifikation wird der Evolvente eine Korrekturform überlagert, die ein gleichmäßiges Tragen der Zähne und den Abbau der Lastkonzentrationen an den Zahnenden bei Achsverlagerungen ermöglichen soll. Diese Einflüsse werden an den Einzelbauteilen berechnet und dann als Schnitt- stelle an die sich anschließende Verzahnungsauslegung aufsummiert übergeben und müssen auch die jeweiligen Fügestellen der geschweißten Großgetriebezahnräder berücksichtigen. Zu beachten sind insbesondere die Wellenverformung, die Lagerverformung, die Fertigungstoleranzbetrachtung, die Verformung der Verzahnung sowie die Verformung der gefügten Scheibenräder. Daher besteht ein weiteres Problem darin, die Verformung des geschweißten Großgetriebezahnrads gerade bei hoch belasteten Zahnrädern explizit zu berücksichtigen.

Die Figuren 5 und 6 zeigen eine erfindungsgemäß erzeugbare Steifigkeitsvariation. Dank einer Zahnkranzdickenerhöhung zu einer Seite hin kann erfindungsgemäß die Steifigkeit zur Bettung des Zahnkranzes manipuliert werden. Diese kann für das treibende, wie für das getriebene Rad, gegeneinander gepaart werden, sodass eine Überlagerung mit der Formkorrektur der Verzahnungen zu einem gleichmäßigeren Tragverhalten über einen breiteren Lastbereich erfolgt. Figur 5 zeigt einen mit Scheibenrädern 18 und 19 verschweißten Zahnkranz 20, bei dem es sich um den in Figur 4 dargestellte Zahnkranz 15 des treibenden Rades im modifizierten Zustand handelt. Ein Vorteil dieser erfindungsgemäßen Modifikation besteht darin, dass die Randbereiche der Verzahnung des Zahnkranzes 20 aufgrund lokal verringerter Zahnkranzdicke weicher gestützt werden, um Eckträger, also ein überproportionales und schädliches Tragen nur über die Kanten, zu vermeiden. Weiterhin sind die Schnittstellen zwischen den Scheibenrädern 18 und 19 und dem Zahnkranz 20 durch die Reduzierung der Zahnkranzdicke an den radial innen liegenden Randbereichen des Zahnkranzes 20 gut zugänglich, wodurch in positiver Art und Weise eine Schweißstrahlenkopplung in Richtung der Pfeile A ermöglicht wird. Ein weiterer positiver Effekt besteht darin, dass eine einseitige Drehbearbeitung des Zahnkranzes 20 während der Weichbearbeitung möglich ist, wodurch ein aufwendiges Umspannen des Bauteils vermieden wird.

Die Figuren 7 bis 9 zeigen eine schematische vergrößerte Querschnittansichten von Übergängen zwischen Scheibenrad und Zahnkranz eines Großgetriebezahnrads gemäß verschiedenen Ausführungsformen der vorliegenden Erfindung, die mögliche Varianten von Schweißbadabstützungen zeigen.

Figur 7 zeigt einen Zahnkranz 21, der mit einem Scheibenrad 22 verschweißt ist. Zur Erzielung einer inneren Schweißbadabstützung ist das Scheibenrad 22 an seinem - in Schweißrichtung (Pfeil A) betrachtet - hinteren Ende entlang seines Außenumfangs mit einem umlaufenden, radial auswärts vorstehenden Vorsprung 22a versehen, der in eine korrespondierend ausgebildete Ausnehmung greift, die umlaufend an dem hinteren Ende des Innenumfangs des Zahnkranzes 21 ausgebildet ist.

Figur 8 zeigt einen Zahnkranz 23, der mit einem Scheibenrad 24 verschweißt ist, wobei die Breite des Scheibenrades größer als die Breite des Zahnkranzes 23 gewählt ist. Zur Erzielung einer äußeren Schweißbadabstützung ist das Scheibenrad 24 an seinem - in Schweißrichtung (Pfeil A) betrachtet - hinteren Ende entlang seines Außenumfangs mit einem radial auswärts vorstehenden Vorsprung 24a versehen, der den Zahnkranz 23 rückseitig umgreift.

Figur 9 zeigt einen Zahnkranz 26, der mit einem Scheibenrad 27 verschweißt ist. Das Scheibenrad 27 ist entlang seines Außenumfangs mit einem beidseitig axial vorstehenden Absatz 28 versehen, an dessen - in Schweißrichtung (Pfeil A) betrachtet - hinteren Ende ein umlaufender, radial auswärts vorstehender Vorsprung 28a ausgebildet ist, der den Zahnkranz 26 rückseitig umgreift. Auch der Zahnkranz 26 ist entlang seines Innenumfangs mit einem axial nach vorne (entgegen der Schweißrichtung) vorstehenden Absatz 30 versehen, der in radialer Richtung mit dem Absatz 28 des Scheibenrades 27 im Wesentlichen fluchtet. Nach dem Verschweißen des Zahnkranzes 26 und des Scheibenrades 27 können die Absätze 28 und 30 abgedreht werden, so dass der Zahnkranz 27 und das Scheibenrad 26 fluchtend ineinander übergehen.

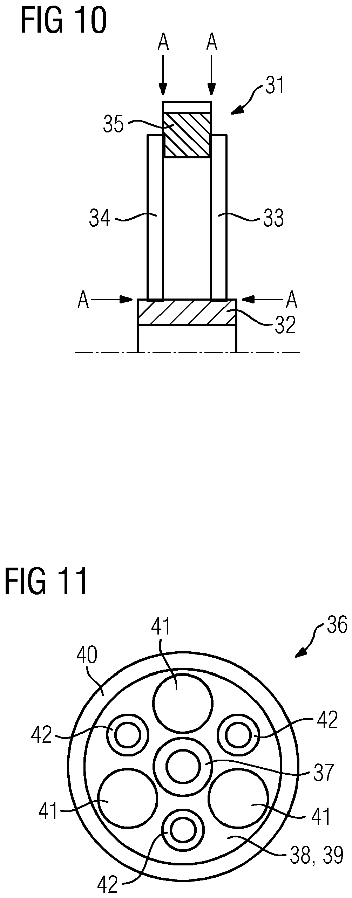

Figur 10 ist eine schematische Ansicht eines hybriden Großgetriebezahnrads 31 gemäß einer weiteren Ausführungsform der vorliegenden Erfindung, das ebenfalls aus einer Nabe 32, zwei Scheibenrädern 33 und 34 und einem Zahnkranz 35 hergestellt ist. Während die Nabe 32 mit den Scheibenrädern 33 und 34, wie bei den vorangegangenen Ausführungsformen in axialer Richtung miteinander verschweißt sind, sind die Scheibenräder 33 und 34 mit dem Zahnkranz 35 bei dieser Ausführungsform in radialer Richtung verschweißt. Es sollte klar sein, dass für die Schweißnähte durch entsprechende Ausbildung der Nabe 32, der Scheibenräder 33 und 34 und des Zahnkranzes 35 ebenfalls Schweißbadabstützungen vorgesehen sein, auch wenn dies in der schematischen Abbildung gemäß Figur 10 nicht dargestellt ist.

Figur 11 zeigt eine schematische Seitenansicht eines Großgetriebezahnrads 36 gemäß einer weiteren nicht erfindungsgemässen Ausführungsform. Bei dem Großgetriebezahnrad 36 handelt es sich ebenfalls um ein hybrides Zahnrad, das aus einer Nabe 37, zwei Scheibenrädern 38 und 39 und einem Zahnkranz 40, die miteinander verschweißt sind. Der Aufbau des Großgetriebezahnrads 36 entspricht im Wesentlichen demjenigen des in den Figuren 1 bis 3 dargestellten Großgetriebezahnrads 1. Im Gegensatz zum Großgetriebezahnrad 1 sind bei dem Zahnrad 31 die Aussparungen 41 jedoch symmetrisch angeordnet und weisen eine Kreisform auf. Darüber hinaus sind sich axial erstreckende Rohrstreifen 42 vorgesehen, welche die Scheibenräder 38 und 39 miteinander verbinden, wodurch die Konstruktion zusätzlich versteift wird. Im Übrigen entsprechen die Konstruktionen der Großgetriebezahnräder 1 und 36 einander.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung eines aus mehreren Einzelkomponenten bestehenden Großgetriebezahnrads (1; 31; 36), das die aufeinander folgenden Schritte aufweist:
f) Bereitstellen der Einzelkomponenten, die zumindest eine Nabe (2; 32; 37), ein Scheibenrad (3, 4; 18, 19; 22; 24; 27; 33, 34; 38, 39) und einen aus Einsatzstahl hergestellten Zahnkranz (5; 20; 21; 23; 26; 35; 40) umfassen,
g) zumindest teilweises mechanisches Weichbearbeiten der Einzelkomponenten,
h) Verbinden der Einzelkomponenten unter Verwendung eines Strahlschweißverfahrens,
i) Einsatzhärten der miteinander verbundenen Einzelkomponenten und
j) Hartbearbeiten zumindest des Zahnkranzes (5; 20; 21; 23; 26; 35; 40),
bei dem das Scheibenrad (3, 4; 18, 19; 22; 24; 27; 33, 34) asymmetrisch ausgebildet wird.

2. Verfahren nach Anspruch 1, bei dem in Schritt c) als Strahlschweißverfahren das Elektronenstrahlschweißverfahren eingesetzt wird.

3. Verfahren nach Anspruch 1, bei dem in Schritt c) als Strahlschweißverfahren das Laserstrahlschweißen eingesetzt wird.

4. Verfahren nach Anspruch 3, bei dem in Schritt c) das Laserstrahlschweißen unter Vakuum oder Teilvakuum eingesetzt wird.

5. Verfahren nach einem der vorhergehenden Ansprüche, bei dem im Rahmen der in Schritt e) durchgeführten Hartbearbeitung ein Hartdrehen und Verzahnungsschleifen erfolgen.

6. Verfahren nach einem der vorhergehenden Ansprüche, bei dem das Scheibenrad (3, 4; 18, 19; 22; 24; 27; 33, 34; 38, 39) mit zumindest einer außermittig angeordneten Aussparung (7; 41) versehen wird, insbesondere mit mehreren außermittig angeordneten Aussparungen (7; 41).

7. Verfahren nach Anspruch 1, bei dem durch die asymmetrische Gestaltung des Scheibenrads (3, 4; 18, 19; 22; 24; 27; 33, 34; 38, 39) der Verzug des Großgetriebezahnrads (1; 31; 36) eingestellt wird.

8. Verfahren nach einem der vorhergehenden Ansprüche, bei dem durch asymmetrische Ausbildung der Dicke des Zahnkranzes (20) die Steifigkeit des Großgetriebezahnrades eingestellt wird.

9. Verfahren nach einem der vorhergehenden Ansprüche, bei dem die Einzelkomponenten zwei Scheibenräder (3, 4; 18, 19; 33, 34; 38, 39) aufweisen, die axial im Abstand voneinander angeordnet werden, und bei dem beide Scheibenräder bezogen auf den Zahnkranz von einer Seite montiert und in Schritt b) von der gleichen Seite weichbearbeitet werden.

10. Verfahren nach einem der vorhergehenden Ansprüche, bei dem in Schweißrichtung betrachtet das hintere Ende zumindest einer Schweißfügestelle durch einen radial vorstehenden Vorsprung (22a; 24a; 28a) gebildet wird, der Teil einer der miteinander zu verschweißenden Komponenten (22; 24; 27) ist.

11. Großgetriebezahnrad (1; 31; 36), das aus mehreren miteinander verschweißten Einzelkomponenten hergestellt ist, die zumindest eine Nabe (2; 32; 37), ein Scheibenrad (3, 4; 18, 19; 33, 34; 38, 39), das asymmetrisch ausgebildet wird, und einen einsatzgehärteten Zahnkranz (5; 20,; 21; 23; 26; 35; 40) umfassen, wobei das Großgetriebezahnrad (1; 31; 36) nach einem Verfahren nach einem der vorhergehenden Ansprüche hergestellt ist.

12. Großgetriebezahnrad (1; 31; 36) nach Anspruch 11, **dadurch gekennzeichnet, dass** das Scheibenrad (3, 4; 18, 19; 22; 24; 27; 33, 34; 38, 39) mit zumindest einer außermittig angeordneten Aussparung (7; 41) versehen ist, insbesondere mit mehreren außermittig angeordneten Aussparungen (7; 41), die insbesondere eine von einer Kreisform abweichende Kontur aufweist/aufweisen.

13. Großgetriebezahnrad (1; 31; 36) nach Anspruch 11 oder 12, **dadurch gekennzeichnet, dass** der Zahnkranz (5; 20,; 21; 23; 26; 35; 40) einen Verbindungsabschnitt (8) mit einer Verbindungsfläche(11, 12), entlang welcher der Zahnkranz (5; 20,; 21; 23; 26; 35; 40) mit dem Scheibenrad (3, 4; 18, 19; 22; 24; 27; 33, 34; 38, 39) verschweißt ist, und einen Zahnkranzabschnitt (9) aufweist, an dem die Verzahnung ausgebildet ist, wobei zwischen dem Verbindungsabschnitt (8) und dem Zahnkranzabschnitt (9) zumindest ein Übergangsradius (10) vorgesehen ist, der im Abstand (a) zu der den Zahnkranz und das Scheibenrad (3, 4; 18, 19; 22; 24; 27; 33, 34; 38, 39) miteinander verbindenden Schweißnaht angeordnet ist.

14. Großgetriebezahnrad (1; 31; 36) nach einem der Ansprüche 11 bis 13, **dadurch gekennzeichnet, dass** zwei Scheibenräder (3, 4; 18, 19; 33, 34; 38, 39) vorgesehen sind, die im Abstand voneinander angeordnet sind.

## Claims

1. Method for producing a large transmission gearwheel (1; 31; 36) consisting of a plurality of individual components, said method comprising the successive steps of:
f) providing the individual components which comprise at least one hub (2; 32; 37), a disk wheel (3, 4; 18, 19; 22; 24; 27; 33, 34; 38, 39) and a toothed ring (5; 20; 21; 23; 26; 35; 40) produced from case-hardened steel,
g) at least partially mechanically soft machining the individual components,
h) joining the individual components using a beam welding method,
i) case hardening the individual components which have been joined to one another and
j) hard machining at least the toothed ring (5; 20; 21; 23; 26; 35; 40),
in which the disk wheel (3, 4; 18, 19; 22; 24; 27; 33, 34) is configured asymmetrically.

2. Method according to claim 1, in which in step c) the electron beam welding method is used as the beam welding method.

3. Method according to claim 1, in which in step c) laser beam welding is used as the beam welding method.

4. Method according to claim 3, in which in step c) the laser beam welding is used under vacuum or partial vacuum.

5. Method according to one of the preceding claims, in which hard turning and gear teeth grinding take place during the course of the hard machining carried out in step e).

6. Method according to one of the preceding claims, in which the disk wheel (3, 4; 18, 19; 22; 24; 27; 33, 34; 38, 39) is provided with at least one recess (7; 41) arranged eccentrically, in particular a plurality of recesses (7; 41) arranged eccentrically.

7. Method according to claim 1, in which the deformation of the large transmission gearwheel (1; 31; 36) is adjusted by the asymmetrical design of the disk wheel (3, 4; 18, 19; 22; 24; 27; 33, 34; 38, 39).

8. Method according to one of the preceding claims, in which the stiffness of the large transmission gearwheel is adjusted by the asymmetrical configuration of the thickness of the toothed ring (20).

9. Method according to one of the preceding claims, in which the individual components have two disk wheels (3, 4; 18, 19; 33, 34; 38, 39) which are arranged axially spaced apart from one another and in which both disk wheels are mounted from one side relative to the toothed ring and in step b) are soft machined from the same side.

10. Method according to one of the preceding claims, in which, viewed in the welding direction, the rear end of at least one weld joint is formed by a radially protruding projection (22a; 24a; 28a) which is part of one of the components (22; 24; 27) to be welded together.

11. Large transmission gearwheel (1; 31; 36) which is produced from a plurality of individual components welded together which comprise at least one hub (2; 32; 37), a disk wheel (3, 4; 18, 19; 33, 34; 38, 39) configured asymmetrically, and a case-hardened toothed ring (5; 20; 21; 23; 26; 35; 40), wherein the large transmission gearwheel (1; 31; 36) is produced according to a method according to one of the preceding claims.

12. Large transmission gearwheel (1; 31; 36) according to claim 11, **characterised in that** the disk wheel (3, 4; 18, 19; 22; 24; 27; 33, 34; 38, 39) is provided with at least one recess (7; 41) arranged eccentrically, in particular with a plurality of recess (7; 41) arranged eccentrically, which in particular has/have a contour deviating from a circular shape.

13. Large transmission gearwheel (1; 31; 36) according to claim 11 or 12, **characterised in that** the toothed ring (5; 20; 21; 23; 26; 35; 40) comprises a connecting portion (8) with a connecting surface (11, 12) along which the toothed ring (5; 20; 21; 23; 26; 35; 40) is welded to the disk wheel (3, 4; 18, 19; 22; 24; 27; 33, 34; 38, 39) and a toothed ring portion (9), on which the gear teeth are formed, wherein at least one transition radius (10) is provided between the connecting portion (8) and the toothed ring portion (9), said transition radius being arranged spaced apart (a) from the weld seam connecting the toothed ring and the disk wheel (3, 4; 18, 19; 22; 24; 27; 33, 34; 38, 39) together.

14. Large transmission gearwheel (1; 31; 36) according to one of claims 11 to 13, **characterised in that** two disk wheels (3, 4; 18; 19; 33, 34; 38, 39) which are arranged spaced apart from one another are provided.

## Revendications

1. Procédé de fabrication d'une grande roue (1; 31; 36) dentée d'engrenage, constituée de plusieurs composants individuels, qui comporte les stades successifs suivants :
f) mise à disposition des composants individuels, qui comprennent au moins un moyeu (2; 32; 37), une roue (3, 4; 18, 19; 22; 24; 27; 33, 34; 38, 39) pleine et une couronne (5; 20; 21; 23; 26; 35; 40) dentée, en acier de cémentation,
g) traitement mécanique doux, au moins en partie, des composants individuels,
h) liaison des composants individuels en utilisant un procédé de soudage par rayonnement,
i) cémentation des composants individuels reliés entre eux et
j) traitement de trempe, au moins de la roue (5; 20; 21; 23; 26; 35; 40),
dans lequel la roue (3, 4; 18, 19; 22; 24; 27; 33, 34; 38, 39) pleine est dissymétrique.

2. Procédé suivant la revendication 1, dans lequel, dans le stade c), on utilise, comme procédé de soudage par rayonnement, le procédé de soudage par faisceau d'électrons.

3. Procédé suivant la revendication 1, dans lequel, dans le stade c), on utilise, comme procédé de soudage par rayonnement, le soudage par faisceau laser.

4. Procédé suivant la revendication 3, dans lequel, dans le stade c), on utilise le soudage par faisceau laser sous vide ou sous vide partiel.

5. Procédé suivant l'une des revendications précédentes, dans lequel, dans le stade du traitement de trempe effectué au stade e), on effectue un façonnage au tour de trempe et une taille de denture.

6. Procédé suivant l'une des revendications précédentes, dans lequel la roue (3, 4; 18, 19; 22; 24; 27; 33, 34; 38, 39) pleine est pourvue d'au moins un évidement (7; 41), disposé en dehors du milieu, notamment de plusieurs évidements (7, 41) disposés en dehors du milieu.

7. Procédé suivant la revendication 1, dans lequel, par la conformation dissymétrique de la roue (3, 4; 18, 19; 22; 24; 27; 33, 34; 38, 39) pleine, on règle le voile de la grande roue (1; 31; 36) dentée d'engrenage.

8. Procédé suivant l'une des revendications précédentes, dans lequel, par la dissymétrie de l'épaisseur de la couronne (20) dentée, on règle la rigidité de la grande roue dentée d'engrenage.

9. Procédé suivant l'une des revendications précédentes, dans lequel les composants individuels ont deux roues (3, 4; 18, 19; 33, 34; 38, 39) pleines, disposées à distance axialement l'une de l'autre et dans lequel on monte les deux roues pleines d'un côté rapporté à la couronne dentée et on les traite de manière douce au stade b) du même côté.

10. Procédé suivant l'une des revendications précédentes, dans lequel, considéré dans la direction de soudage, on forme l'extrémité arrière d'au moins un point d'une rainure de soudage par une saillie (22a; 24a; 28a) en saillie radialement, qui fait partie de l'un des composants (22; 24; 27) à souder entre eux.

11. Grande roue (1; 31; 36) dentée d'engrenage, fabriquée à partir de plusieurs composants individuels à souder entre eux, qui comprend au moins un moyeu (2; 32; 37), une roue (3, 4; 18, 19; 33, 34; 38, 39) pleine dissymétrique et une couronne (5: 20; 21; 23; 26; 35; 40) dentée cémentée, la grande roue (1; 31; 36) dentée d'engrenage étant fabriquée par un procédé suivant l'une des revendications précédentes.

12. Grande roue (1; 31; 36) d'engrenage suivant la revendication (11), **caractérisée en ce que** la roue (3, 4; 18, 19; 22; 24; 27; 33, 34; 38, 39) pleine est pourvue d'au moins un évidement (7; 41), disposé en dehors du milieu, notamment de plusieurs évidements (7, 41) disposés en dehors du milieu, qui a/ont notamment un contour s'écartant d'une forme circulaire.

13. Grande roue (1; 31; 36) d'engrenage suivant la revendication 11 ou 12, **caractérisée en ce que** la couronne (5; 20; 21; 23; 26; 35; 40) dentée a une partie (8) de liaison, ayant une surface (11, 12) de liaison le long de laquelle la couronne (5; 20; 21; 23; 26; 35; 40) dentée est soudée à la roue (3, 4; 18, 19; 22; 24; 27; 33, 34; 38, 39) pleine et une partie (9) de couronne dentée sur laquelle est formée la denture, dans laquelle il est prévue, entre la partie (8) de liaison et la partie (9) de couronne dentée, au moins un rayon (10) de transition, qui est disposé à distance (a) du cordon de soudure reliant entre elles la couronne dentée et la roue (3, 4; 18, 19; 22; 24; 27; 33, 34; 38, 39) pleine.

14. Grande roue (1; 31; 36) d'engrenage suivant l'une des revendications 11 à 13, **caractérisé en ce qu'**il est prévu deux roues (3, 4; 18, 19; 33; 34; 38; 39) pleines à distance l'une de l'autre.
